# EUROPEAN PATENT SPECIFICATION

(11) **EP 2 349 068 B1**
(45) Date of publication and mention of the grant of the patent: **17.07.2019**
(21) Application number: 09759798.3
(22) Date of filing: 04.11.2009
(51) Int. Cl.: A61C 17/22, A46B 9/04

(54) **BRUSH HEAD FOR AN ELECTRIC TOOTHBRUSH**
BÜRSTENKOPF FÜR EINE ELEKTRISCHE ZAHNBÜRSTE
TETE DE BROSSE A DENTS ELECTRIQUE

(30) Priority: 05.11.2008 EP 08019329
(43) Date of publication of application: 03.08.2011
(73) Proprietor: Braun GmbH, 61476 Kronberg/Taunus (DE)
(72) Inventor: DRIESEN, Georges, 61276 Weilrod (DE); SCHMID, Michael, 60599 Frankfurt/Main (DE); SCHAEFER, Norbert, 60320 Frankfurt/Main (DE); REICK, Hansjoerg, Cincinnati Ohio 45243 (US); SCHAMBERG, Stefan, 61250 Usingen (DE); THURNAY, Eva, Susanne, 65929 Frankfurt/Main (DE); MC GARRY, Rory, 60385 Frankfurt/Main (DE)
(74) Representative: Töpert, Verena Clarita
(86) International application number: PCT/IB2009/054898
(87) International publication number: WO 2010/052652

(56) References cited:
- EP-A1- 1 607 021
- WO-A1-2004/000155
- CA-A1- 2 649 825
- DE-U1-202007 017 676
- JP-A- 2000 014 451
- JP-A- 2007 151 795
- US-A- 3 792 504
- US-A- 6 058 541
- US-A1- 2002 138 926
- US-A1- 2005 060 822
- US-A1- 2007 089 256
- US-B1- 6 490 747

## Description

### FIELD OF THE INVENTION

This invention relates in general to an electric toothbrush and in particular to a brush head for such an electric toothbrush, having a preferably substantially plate-shaped bristle support including mounting means for the movable mounting of the bristle support, said bristle support carrying several outer bristle tufts and several inner bristle tufts, with the outer bristle tufts having a greater height than the inner bristle tufts such that in the working surface defined by the free ends of the tufts there is formed a central depression which has a groove-shaped bottom.

### BACKGROUND OF THE INVENTION

On electric toothbrushes it is known to use rotationally drivable bristled sections comprising a plurality of bristle tufts which are affixed to a substantially circular, plate-shaped bristle support whose axis of rotation extends usually centrally in relation to the bristled section. The bristled section is rotated usually with an oscillating reciprocating motion, upon which an oscillating poking motion may be superimposed, where applicable.

Whereas substantially plane bristled sections, on which the free ends of the tufts lie in a common plane, were used initially, it was proposed in the interest of an improved cleaning of the interproximal spaces to use bristled sections which at the edge have longer and further protruding tufts intended to penetrate better into the interproximal areas on account of their projection. Disclosed, for example, in EP 0835081 B1 are tufts which are arranged on the circumference of a circular, rotationally drivable bristled section in the region of the longitudinal axis and project beyond the tufts arranged further inside.

Such extended tufts on the outer circumference of the bristled section have a good self-centering effect, which during rotational driving of the bristled section locates the brush centrally on the respective tooth, and really do enable an improved cleaning of the interproximal spaces, however the cleaning of the tooth flank sections adjoining the interproximal spaces fails to be optimal as yet. Furthermore, such configurations of the bristled section can no longer be moved really gently from one tooth to another, which results in the brush head producing a prodding sensation during cleaning motions in the toothbrush longitudinal direction.

Similarly constructed brush heads, which are rotationally drivable and include a central recess or depression in the working surface of the bristled section, are known from US-D 478,214, US-D 517,325 or US-D 455,556.

Also proposed in the art was a rotationally drivable toothbrush head having as a depression a curved groove which extends transversely across the bristled section, forming the bristled section's working surface and being constructed as though milled through the tufts. Through such a substantially uniaxial depression in the bristled section or its working surface it is possible to achieve not only a better holding of the dentifrice or a similar, gel-type dental cleansing agent but also a better cleaning effect on the teeth accompanied by a more agreeable, gentler cleaning sensation. The contour of the working surface, which rises to opposing circumferential sides, nestles better against the lateral tooth flanks which, so to speak, are enveloped in a snug fit so that in particular the sections of the tooth flanks adjoining the interproximal spaces are better cleaned.

However, with such known configurations of a bristled section with a groove-shaped depression extending transversely across the entire bristled section, the cleaning performance in the interproximal spaces suffers or would require excessive, undesirable contact pressures to make the central tufts bend away sufficiently.

Document US2005/0060822 discloses toothbrush heads in accordance with the preamble of claim 1. Proceeding from this realization, it is a desire to provide an improved electric toothbrush and an improved brush head therefore which prevent the disadvantages of the prior art while developing the art further in advantageous manner. In particular it is a desire to achieve an efficient and complete cleaning of the interproximal spaces without impairing the cleaning effect on the tooth flanks, with the brush being expected to impart a gentle, agreeable cleaning sensation during operation and afford ease of handling through a sufficient self-centering effect.

### SUMMARY OF THE INVENTION

This object is accomplished according to the invention by a brush head according to claim 1. Further embodiments of the invention are given in accordance with the dependent claims.

It is thus proposed to provide a (detachably mountable) brush head for an electric toothbrush with a bristle support that carries at least two outer bristle tufts and several inner bristle tufts. The free ends of the bristles of the outer and inner bristle tufts define a working surface of the brush head, i.e. the working surface is the contact surface for cleaning the teeth. The inner bristle tufts are arranged such that the free ends of the bristles of the inner bristle tufts form a central depression in the working surface, which central depression is realized as a concave groove having a continuous curvature. With continuous curvature it is meant that the trim of the bristles of each of the inner bristle tufts follows the curvature of the concave groove and hence each of the inner bristle tufts has a curved upper surface defined by the free ends of the bristles of the respective inner bristle tuft that forms a part of the working surface of the central depression. Further, the outer bristle tufts have a greater height than the inner bristle tufts at least on the side that faces the inner bristle tufts such that a step-shaped jump in height is achieved between the continuously curved central depression and the working surface formed by the outer bristle tufts. While the central depression can be formed to be optimally adapted to the surface of the teeth (i.e. the curvature of the central depression can be a compromise between the strong curvature of the molars and the low curvature of the front teeth), the step-shaped jump enables the bristles of the outer bristle tufts to deeply penetrate into the interproximal areas between the teeth. If the continuous curvature of the central depression would simply continue to the outer bristle tufts, the outer bristles of the outer bristle tufts would be trimmed with a relatively high angle (e.g. above 30 degrees with respect to a plane parallel to the bristle carrying surface of the bristle support) which renders rounding of the outer bristles as difficult. The outer bristles would most probably not get sufficiently rounded in a standard rounding process and would thus remain a sharp tip that would injure the gums in use. The bristle support has mounting means for the movable mounting of the bristle support to the brush head such that driving the bristle support into a motion, specifically a rotational oscillatory movement, by a drive arrangement of a handle section of the electric toothbrush is enabled. Overall, the proposed brush head provides very good cleaning capabilities for the frontal and lateral surfaces of the teeth and for the interproximal areas between the teeth. Further, due to the specific design, a brush head can be provided that is gentle to the gums, is self-centering and provides a smooth mouth-feel during operation.

In an embodiment, the angle between a tangent lying at the edge of the groove-shaped concave depression in a cross-sectional cut though the brush head and a plane lying parallel to the bristle carrying surface of the bristle support is maximally between about 10 degrees and about 25 degrees and in particular maximally between about 15 degrees and about 20 degrees. A bristle that is trimmed at such an angle below about 25 degrees and in particular below about 20 degrees can sufficiently be rounded in a conventional bristle rounding procedure as is known in the art. The rounded bristles of the inner bristle tufts are thus gentle to the gums and injuries of the gums are avoided.

In an embodiment, the central depression has a height difference from the center of the depression to the edges of the depression of about 0.4 mm to about 1.0 mm and in particular of about 0.6 mm to 0.8 mm. This provides a compromise for good cleaning properties on the molars as well as on the front teeth.

It is thus proposed to adapt the central depression with its surface contour to the curved side contour of the tooth flanks such that even without major deformations of the individual tufts, the working surface of the tufts nestles against the tooth flank contour and, for interproximal cleaning, to surround the central depression with outer lying tufts which project in length or height relative to the depression. By means of on the one hand step-wise projecting tufts elevated at the circumferential edges and on the other hand a continuously curved groove-shaped, contoured middle portion of the bristled section or working surface whose curvature is shaped to conform to the tooth flank contour, it is possible on the one hand for the interproximal spaces to be penetrated far enough and on the other hand for the lateral tooth flanks to be processed and cleaned over their full surface also in sections adjoining the interproximal spaces without excessive bending away of the middle tufts. According to the invention, a step-shaped jump in height is provided between the central depression and said outer bristle tufts with the greater height. It should be noted that the bristles may also be provided in groupings other than tufts. Therefore, any reference to the tufts can also be regarded alternatively as a reference to a majority of bristles in accordance with the invention, as described above and below and in the claims. Furthermore, other types of dental cleaning elements can be used alternatively instead of bristles.

Unlike bristled sections with plane depressions in the middle, the tufts in the central region and also in the areas of the bristled section oriented towards the longer, outer bristle tufts rest snugly against the lateral flanks of the teeth even without bending away. In addition, a gentler cleaning sensation results, in particular when moving the brush head from one tooth to the next, because due to the varying tuft height also in the central region individual tufts are pushed away in succession when the brush sweeps over a tooth flank, the brush head being pushed, so to speak, along the curved surface of the depression around the flank of the next tooth without the brush head falling so to speak into the depression. In particular with rotational driving of the bristled section there results in addition a gentle wiping motion because the tufts hugging the tooth flank are more intensively bent as the distance from the axis of rotation increases. The step-wise projecting outer bristle tufts give rise in addition to an intensified self-centering effect which facilitates handling.

The groove-shaped curvature of the depressed, central portion of the bristled section surface can be achieved generally in a variety of ways. For example, a correspondingly curved bristle support could be provided while the tufts are of uniform length. However, in a further aspect of the invention the tufts and in particular the inner lying tufts vary in their length such that they define with their free ends said groove-shaped curvature. In particular the length of the inner lying tufts can increase in the direction of the curvature of the working surface defined by the free ends with increasing distance from a center point of the bristle support, such as to define said groove-shaped curvature of the central depression. Through such a varying length of the tufts it is possible to achieve a gentle cleaning sensation and a gentle movement of the bristled section over the teeth because the further projecting bristles are able to bend away more easily on account of their greater length.

In a further aspect, the brush head may have a groove-shaped bottom which is substantially straight or undulated in a direction vertical to the direction of the curvature. An adaptation of the bristle end topography in lateral tooth extension is thus provided.

In order to obtain the continuous curvature of the surface of the central depression, the free ends of the inner bristle tufts, which define said working surface in the region of the depression, do not have end surfaces extending parallel to the bristle support but end surfaces which are inclined at an acute angle to the surface of the bristle support, with different inner bristle tufts having differently inclined end surfaces, such that the differently inclined end surfaces define in mutual complementation the curvature of said concave groove-shaped contour of the central depression. In particular, the inclination of the end surfaces of the free ends of the tufts can be made increasingly more pronounced as the distance of the tufts from the center of the bristle support increases, thus resulting in an increasingly steeper wall of the groove-shaped bottom in the direction of the circumferential edges of the bristled section.

The free ends of the inner bristle tufts can have an end surface which is not plane but arcuately curved such that the mutually complementing free ends of neighboring tufts define a continuously curved enveloping surface which forms the previously mentioned concave groove-shaped depression. The curved end surfaces of the individual tufts are advantageously uniaxially curved, i.e., they are in themselves already curved in groove shape, so that they run in a straight line in one direction while having a curvature in a direction perpendicular thereto.

The groove-shaped curved bottom of the central region of the working surface of the bristled section can be generally of a symmetrical configuration, i.e., extending substantially parabolically. In this case the inner bristle tufts rise with their free ends at a substantially equal rate to opposing circumferential sides of the bristled section.

Provision can also be made for an asymmetric path of the curvature of the central depression in the working surface of the bristled section, in which case in particular a banana-shaped groove curvature can be provided. In this arrangement, the tufts defining the central depression in the working surface of the bristled section rise unequally to opposing circumferential sides so that the one upper edge of the groove-shaped depression is higher than the opposing edge. Among other things, this can be used, for example, to compensate for the tendency of users to position the brush head against the tooth flanks in a not exactly tangential but slightly V-shaped orientation.

Said asymmetry of the groove-shaped depression can be generally variously pronounced. The asymmetric curvature may be so pronounced that an imaginary inclined plane, which sits on the highest points of the depression and/or reflects an approximately calculated mean gradient of said groove-shaped curvature, is inclined at an angle of inclination of 2° to 10°, preferably 3.5° ± 1°, to a bristled section main axis preferably vertical to the bristle support.

In such an arrangement, the tufts arranged bilaterally on opposing sides of the central depression and projecting in height over the level of the adjoining depression sections can be of unequal height, with the difference in height lying in the range from 5% to 20%, preferably 10% ± 5%, of the height of said longer tufts and equaling in particular 0.3 to 2 mm, preferably 0.5 to 1.0 mm, approximately.

The asymmetric height profile with inclined working surface of the bristled section can be an advantage in particular when the bristled section with its bristled section main axis, which extends vertically onto the bristle support and/or parallel to the statistical main direction of the tufts, and/or the bristle support is/are arranged to be tilted in relation to the toothbrush axis so that the main axis of the bristled section is inclined at an acute angle to the vertical on the toothbrush longitudinal axis, in which arrangement an angle of inclination of 5° to 15°, preferably 5° to 10°, can be provided advantageously. Advantageously, the inclination of the height profile of the bristled section is orientated in opposite direction to the tilting of the bristle support so that the tilting of the bristled section is compensated for at least in part. It is thus possible, given a three-dimensional driving of the bristled section, i.e., a rotary motion about an axis of rotation and a poking motion along a poking axis which advantageously can be approximately parallel to the axis of rotation and/or to the bristled section main axis, on the one hand to reduce the intensity of the poking motion or its reaction forces on the gingiva and on the other hand to still achieve an efficient cleaning performance with retention of a self-centering effect.

A good compromise between good interproximal cleaning with sufficiently deep penetration into the interproximal spaces on the one hand and obstruction-free cleaning of the adjoining tooth flank areas and a gentle cleaning sensation on the other hand is achieved by the jump in height between the outer, longer tufts and the adjacent areas of the central depression being of a magnitude in the range from 0.5 mm to 3 mm, preferably about 0.5 mm to about 1.5 mm or alternatively 1.5 mm ± 0.5 mm, approximately, and specifically about 0.7 mm to 0.9 mm.

To achieve an improved interproximal cleaning effect, at least one of the outer bristle tufts has at least one chamfer on its free end surface. In particular the lateral edge of the end surfaces can be chamfered. Such chamfering of the free ends of the longer outer bristle tufts affords particular advantages even in the absence of a groove-shaped central depression. On the one hand said longer outer bristle tufts can better penetrate into the interproximal spaces. On the other hand the brush head can be moved more easily and more gently from one tooth to the next because the chamfers of the circumferentially outer lying tufts raise the bristled section so to speak in the manner of a wedge-shaped inclined surface onto the next tooth flank.

In this arrangement, the outer bristle tufts can be generally chamfered towards both the inner side and the outer side. However, in an advantageous embodiment of the invention, only one chamfer is provided on one of the sides of the respective tuft so that a sufficiently wide, non-chamfered end surface remains, as a result of which a cleaning effect is achieved equally in the interproximal spaces and on the tooth flanks.

In a particularly advantageous further aspect of the invention, the outer edges of the free ends of the outer bristle tufts, i.e., the edges facing away from the inner bristle tufts are chamfered. As a result, the brush head can be pushed particularly gently from one tooth to the next. Also, while the central depression is cleaning a certain tooth during operation and the long bristles of the outer bristle tufts penetrate into the interproximal area for respective cleaning, the chamfered outer sides of the outer bristle tufts already touch the neighboring teeth and thus provide a multi-tooth cleaning effect.

Alternatively or in addition, the inner-side edge of the end surface of said outer, longer or also shorter tufts can also be chamfered. As a result, the working surface of the bristled section rests with a particularly snug fit against the round-bodied tooth flanks. The inner-side chamfer is a continuation, so to speak, of the groove-shape curved depression in the center of the working surface of the bristled section. This also enhances the supra-gingival cleaning effect, that is, the cleaning of the boundary area between the hard tooth substance and the gingiva.

Depending on the application and configuration of the tufts, the chamfer on the circumferential outer bristle tufts can be variously pronounced. A good cleaning effect both between the teeth (i.e. interproximally) and on their surfaces can be achieved when said chamfer of the circumferential tufts is inclined at an angle of approximately 20° to 60°, preferably 25° to 40° and specifically 30 degrees to 35 degrees, relative to the non-chamfered end surface of said tuft. Generally, the depth of the chamfer can be variously selected, with an advantageous compromise between easy entry into the interproximal spaces and remaining cleaning capability on the tooth flanks being accomplished if said chamfer extends over approximately 25% to 75% of the width of the outer bristle tuft at its end. In this context, "width" is understood to mean the dimension of the outer bristle tuft vertically to its longitudinal axis and transversely to the longitudinal direction of the chamfer.

Particularly effective are the circumferential outer bristle tufts, in particular in combination with said chamfers, when said outer bristle tufts are inclined at least with their outer side towards the outer circumferential side at an acute angle relative to a vertical on the bristle support, and this preferably at an angle in the range from 1.5° to 30°, in particular 1.5° to 15°, preferably 3° to 5°, approximately. As a result the tufts acquire a reduced resistance to buckling in one direction during the to and fro motion of the brush head, thus giving rise to better insertion into the interproximal spaces.

In a further aspect of the invention, said outer bristle tufts have a cross-sectional area that grows larger towards their free ends and/or lateral flanks that spread apart as they progress from the bristle support. In particular said outer bristle tufts can be trapezoidally shaped as seen in a longitudinal sectional view, such that the free ends of the tuft are wider than its base on the bristle support. On the one hand, such a trapezoidal configuration of the tufts imparts a larger working surface on their free ends. This also enables better holding of dentifrice on the bristle ends. On the other hand, the fan-type spreading enables the bristles within a tuft to move relative to each other with greater ease, which results in a better adaptation to the tooth contour and an improved cleaning performance. In particular with lateral chamfers of the free ends of the tufts, said tufts acquire favorable geometrical proportions with more tangible edges which nestle better against the boundary contours of the teeth.

The trapezoidal configuration of the outer bristle tufts is advantageously asymmetric in relation to a vertical on the bristle support. In particular, an inner flank of said outer bristle tufts, which faces the inner bristle tufts, can extend substantially vertically to the surface of the bristle support while an outer side of the respective outer bristle tuft, which faces away from the inner bristle tufts, is inclined towards the outer side at an acute angle to a vertical on the bristle support. Accordingly, the outer flanks stand off outwardly at an angle while the inner flanks stand straight, that is, they are aligned substantially vertically to the bristle support surface.

In a further aspect of the invention, several outer bristle tufts can form with their free ends a joint, continuous surface which, seen in a plan view, can have advantageously an elongated shape. On the one hand, this ensures a cleaning effect covering a large area. On the other hand, the dentifrice or the tooth cleaning agent is held better in the inner depression of the working surface.

On such an elongated bristled section, the previously mentioned chamfer on the free end of the bristled section extends advantageously parallel and/or tangentially to the longitudinal axis of the elongated end surface.

In a further aspect of the invention, outer bristle tufts are provided on the outer circumference in opposing circumferential sectors on opposing circumferential sides so that the central depression in the working surface of the bristled section extends between the opposing longer circumferential tufts. In this arrangement, the longer, outer bristle tufts are not provided along the entire circumference of the bristled section but only in limited angular sectors of preferably less than 60° per sector angle, whereas no longer, elevated outer bristle tufts are positioned circumferentially in intermediate sectors in which the groove-shaped curved depression in the central region is at its deepest. The concave groove-shaped central depression extends, so to speak, transversely across the entire bristled section. In said sectors in which the groove-shaped depression is at its deepest, the outer circumferential tufts are adapted to the configuration of the groove-shaped depression contour or they form part of it.

The brush head can be generally driven in a variety of ways. Different drive kinematics can be implemented depending on the configuration of the toothbrush and its drive. In a further aspect of the invention, the driving motion comprises an oscillatory rotational motion about an axis of rotation which extends through the bristle support. In an embodiment of the invention, said axis of rotation can extend vertically to the plane of the bristle support through its center point or center of gravity. Optionally, an additional pulsing motion can be provided along the axis of rotation.

However, according to an alternative embodiment of the invention, it is also possible for the axis of rotation to be positioned eccentrically so that motion components of different magnitude are generated on different circumferential sides of the bristled section. In a further aspect of the invention, the eccentricity applies to the longer, outer bristle tufts, that is, the axis of rotation is displaced parallel to a connecting line through the opposing, outer, longer tufts. Depending on the configuration of the bristled section, the eccentricity can be variously pronounced, with a good compromise between cleaning movements of desirably different size on different circumferential sides on the one hand and still tolerable vibrating movements on the other hand being achieved when the axis of rotation divides a diameter line of the bristle support in a length ratio of 55% to 45% up to 70% to 30%.

Alternatively or in addition, it is possible for the axis of rotation of the bristle support to be inclined at an acute angle to the plane defined by said support, with the angle of inclination being preferably in the range from 89° to 65°, in particular 88° to 82°, relative to the plane of the bristle support. As a result it is possible, in conjunction with the groove-shaped curved surface profile of the bristled section, to superimpose a poking motion upon the rotary motion. Preferably, the axis of rotation is tilted such that the bristled section is tilted away from the handle section of the toothbrush.

Given a rotary oscillation of the bristled section, in a further aspect of the invention the end surface of the outer bristle tufts, which looks elongated in the plan view, extends in an arc about the axis of rotation, in particular in an approximately circular arc about the axis of rotation.

In a further aspect of the invention, the previously mentioned chamfers on the outer ends of the longer, outer bristle tufts can nevertheless extend in a straight line, preferably substantially tangentially to the arcuately curved, elongated end surface of the tufts. On the one hand this simplifies the production of the tufts. On the other hand this results in a circumferentially varying width of the chamfers and, concomitant thereto, of the non-chamfered end surfaces, which in the manner of wedge surfaces can cause the corresponding tufts to be continuously inserted into and withdrawn from the interproximal spaces.

However, according to an alternative embodiment of the invention it is also possible for the chamfers to extend equally in an arcuate curve around the axis of rotation, in particular such that the chamfers and/or the remaining, non-chamfered end surfaces of the tufts have a contour and width that is constant in circumferential direction. As a result it is possible to achieve a particularly gentle contacting of the tufts with the tooth flanks and a favorable or uniform penetration into the interproximal spaces.

In a further aspect of the invention, the bristle support is not of an exactly circular configuration but is of a slightly oval and/or elliptical shape. Alternatively or in addition, it is possible for at least the outer row of tufts to be arranged not on a circle but on a ring flattened on one side or on multiple sides in particular in the form of an oval and/or an ellipse. On the one hand, a high bristle density is achievable with a bristled section having such an oval or elliptical contour. On the other hand, such a form has a beneficial effect on the movement of the individual tufts. In particular when the short axis of the ellipse or the transversal axis of the oval extends parallel to the longitudinal axis of the groove-shaped contour of the central depression - which in the neutral position of the bristle support extends advantageously in a direction transverse to the toothbrush longitudinal direction - then the outer longer tufts positioned on a diameter line arranged vertically thereto acquire an additional motion component relative to the tuft positioned in the deep region of the groove-shaped depression, so that a particularly efficient interproximal cleaning action is achieved. This elliptical or oval shape can be somewhat asymmetrically distorted from the geometrical ideal.

The outer, longer tufts enclose the inner bristle tufts along a distance covering 25% to 75%, approximately, of the circumference of the bristled section or the bristle support.

The inner bristle tufts, which with their free ends define said central depression in the working surface, can form with their free ends a substantially continuous surface such that a continuous concave groove-shaped depression results (here it has to differentiated between the continuous surface formed by the free ends of the bristles, which are so close together that individual bristle tufts cannot be distinguished anymore and the continuous curvature of the central depression - the latter could be achieved with a continuous surface or with a surface in which gaps between the bristle tufts are present). On the one hand, it is thus possible to achieve a nestling around the full surface of the tooth flanks and hence a cleaning effect covering a large area. On the other hand, it has a beneficial effect on the positioning of the dentifrice or the tooth cleaning agent, which is held on the working surface of the bristled section and does not flow so easily between the tufts down onto the bristle support.

The concave groove-shaped bottom, which is formed by the free ends of the bristles, can be constructed as part of a cylinder shape. In this arrangement, the radius of a section through the groove-shaped bottom or the cylinder shape is about 9 mm to about 15 mm, in particular about 10 mm to about 13 mm and specifically about 12 mm.

In an alternative further aspect of the invention, said inner bristle tufts can form with their free ends separate end surfaces, as a result of which a better discharge of dislodged debris is achievable.

In another embodiment, the brush head in accordance with the above features is provided in an electric toothbrush. As such, the bristle end topography proves to be particularly advantageous in conjunction with a rotationally oscillated brush head on which the brush head oscillates to and fro through a pivot angle. The mounting means of the bristle support hence allow for driving the bristle support in a rotational oscillatory manner via a driving arrangement present in a handle section of the electric toothbrush.

In an embodiment, the concave groove-shaped bottom of the central depression extends in a direction transverse to the longitudinal axis of the toothbrush when the bristle support is in a non-deflected neutral position. Hence, when the user holds the toothbrush in the hand during operation in a horizontal position, the concave groove-shaped depression extends vertically in this neutral position. In this holding position, the outer bristles tufts may then be arranged at the sides of the vertically extending groove (i.e. the outer bristle tufts are then arranged opposite to each other along the longitudinal axis of the toothbrush).

### BRIEF DESCRIPTION OF THE DRAWINGS

These and further features of the invention which, when used singularly or in any subcombination irrespective of their summary in the claims, may form the subject-matter of the present invention will become apparent not only from the claims but also from the subsequent description and the accompanying drawings explaining preferred embodiments of the invention in greater detail. In the drawings,
FIG. 1 is a schematic side view of an electric toothbrush having a rotationally drivable brush head according to an exemplary embodiment of the invention;
FIG. 2 is a top plan view of the brush head of the toothbrush of FIG. 1;
FIG. 3 is a longitudinal sectional view of the brush head taken along the line B-B of FIG. 2 parallel to the longitudinal axis of the toothbrush;
FIG. 4 is a longitudinal sectional view of the brush head of FIG. 2 taken along the line A-A of FIG. 2;
FIG. 5 is an enlarged side view of one of the outer, longer bristle tufts of FIG. 3 in an enlarged schematic representation showing the chamfer angles of the tuft;
FIG. 6 is a schematic top plan view of the brush head of the toothbrush of FIG. 1 according to another embodiment of the invention;
FIG. 7 is a longitudinal sectional view of the toothbrush head taken along the line B-B of FIG. 6 parallel to the longitudinal axis of the toothbrush;
FIG. 8 is a longitudinal sectional view of the brush head taken along the line A-A of FIG. 6;
FIG. 9 is a schematic top plan view of the brush head of the toothbrush of FIG. 1 according to another embodiment of the invention;
FIG. 10 is a longitudinal sectional view of the toothbrush head taken along the line B-B of FIG. 9 parallel to the longitudinal axis of the toothbrush;
FIG. 11 is a longitudinal sectional view of the brush head taken along the line A-A of FIG. 9;
FIG. 12 is a schematic top plan view of the brush head of the toothbrush of FIG. 1 according to another embodiment of the invention;
FIG. 13 is a longitudinal sectional view of the toothbrush head taken along the line B-B of FIG. 12 parallel to the longitudinal axis of the toothbrush;
FIG. 14 is a longitudinal sectional view of the brush head taken along the line A-A of FIG. 12;
FIG. 15 is a schematic top plan view of the brush head of the toothbrush of FIG. 1 according to another embodiment of the invention;
FIG. 16 is a longitudinal sectional view of the toothbrush head taken along the line B-B of FIG. 15 parallel to the longitudinal axis of the toothbrush;
FIG. 17 is a longitudinal sectional view of the brush head taken along the line A-A of FIG. 15;
FIG. 18 is a schematic top plan view of the brush head of the toothbrush of FIG. 1 according to another embodiment of the invention;
FIG. 19 is a longitudinal sectional view of the toothbrush head taken along the line B-B of FIG. 18 parallel to the longitudinal axis of the toothbrush;
FIG. 20 is a longitudinal sectional view of the brush head taken along the line A-A of FIG. 18;
FIG. 21 is a schematic top plan view of the brush head of the toothbrush of FIG. 1 according to another embodiment of the invention;
FIG. 22 is a longitudinal sectional view of the toothbrush head taken along the line B-B of FIG. 21 parallel to the longitudinal axis of the toothbrush;
FIG. 23 is a longitudinal sectional view of the brush head taken along the line A-A of FIG. 21;
FIG. 24 is a schematic top plan view of the brush head of the toothbrush of FIG. 1 according to another embodiment of the invention;
FIG. 25 is a longitudinal sectional view of the toothbrush head taken along the line B-B of FIG. 24 parallel to the longitudinal axis of the toothbrush;
FIG. 26 is a longitudinal sectional view of the brush head taken along the line A-A of FIG. 24;
FIG. 27 is a schematic longitudinal sectional view of the brush head of the toothbrush of FIG. 1 according to another embodiment of the invention, in which the circumferential outer longer bristle tufts have inner chamfers on their outer ends; and
FIG. 28 is a schematic function diagram of the brush head of FIG. 27 showing how the curved working surface of the bristled section hugs a tooth flank.

### DETAILED DESCRIPTION OF THE INVENTION

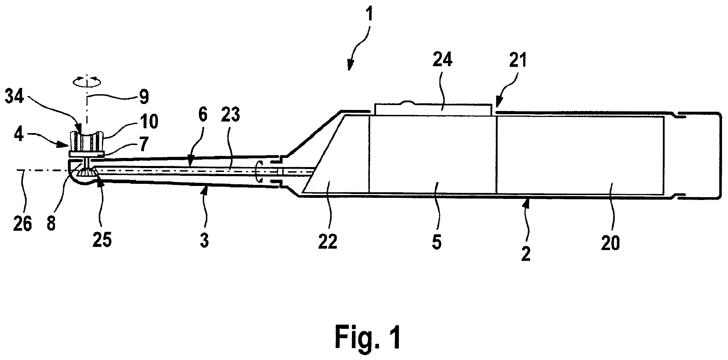

The exemplary electric toothbrush 1 shown in FIG. 1 comprises a handle section 2 and a brush head 4 adapted to be detachably coupled to it. The brush head 4 comprises a neck section 3 of the toothbrush 1 connected to the handle section 2, said neck section 3 being constructed in the form of a partly hollow tube.

The handle section 2 accommodates in its interior an energy source 20, preferably in the form of a rechargeable battery, a motor 5, preferably in the form of an electric motor, and a control device 21.

In the embodiment shown, the rotary motion of the motor 5 is translated by means of a gearing 22 into an oscillatory rotational motion of a drive shaft 23 which extends through the neck section 3 to the distal end of the brush head 4. The toothbrush 1 can be activated and deactivated with a switch 24 mounted on the handle section 2.

In known manner using a suitable gearing (e.g. a bevel gearing 25 unlike in the shown embodiment), at the end of the drive shaft 23 a bristle carrier 7 is drivable into an oscillatory rotational motion about an axis of rotation 9 which extends substantially in a direction transverse to the toothbrush longitudinal axis 26. As this occurs, the angular range swept by the bristle support 7 of the brush head 4 has a value advantageously in the range of ± 35° ± 5°, approximately, with an oscillation in the range from ±10° to ± 100° being also possible. The oscillation frequency can vary and lie, for example, between 10 Hz and 100 Hz. In the embodiment shown in FIG. 1, the axis of rotation 9 forms a right angle with the toothbrush longitudinal axis 26. In addition, a drive of the brush head 4 is provided in a third dimension for its pulsing motion in the direction of the axis of rotation or oscillation.

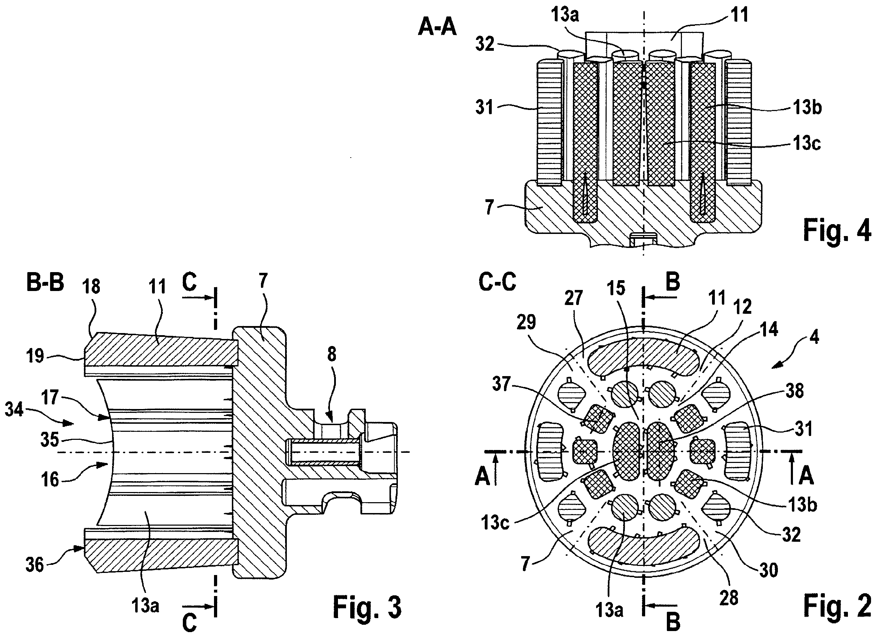

An exemplary embodiment of a brush part for use in the brush head 4 of the toothbrush 1 is shown in FIGS. 2 to 5. In this embodiment, the bristle support 7 is round, however not circular (even though a circular shape is not excluded) but slightly oval and/or elliptical, with the longer axis of the oval or the ellipse in the neutral position of the bristle support 7 extending parallel to the toothbrush longitudinal axis 26, and the shorter axis of the oval or the ellipse extending in a direction transverse to it. In FIG. 2 the longer axis of the oval or the ellipse is parallel to the line B-B.

Arranged on the bristle support 7 is a plurality of bristle tufts which are arranged in several approximately circular or non-circular rings 12, 14 and 15 and spread over the bristled section 10. Positioned on an outer ring 12 in the embodiment of FIG. 2 are eight bristle tufts, of which four have an elongated contour while another four have a - roughly speaking - round or equilateral cross-sectional contour. The length of the tufts on said outer ring 12 varies, as will be explained in more detail, with - roughly speaking - longer tufts being provided generally in opposing sectors 27 and 28, which in the initial position of the bristle support 7 contain the toothbrush longitudinal axis 26, than in sectors 29 and 30, which are orientated in a direction transverse thereto or lie in between, cf. FIG. 2.

As FIG. 2 shows, the tufts 11 and 31 lying on the outer ring 12 on the main axes B-B and A-A, respectively, are elongated in the plan view while the tufts 32 lying in between have an approximately equilateral contour or an approximately cubic or round cross-section. Said elongated tufts 11 and 31 extend in an arcuate curve around the axis of rotation 9, cf. FIG. 2.

In this arrangement, the outer bristle tufts 11 sitting on the longer main axis B-B extend over a circumferential section of approximately 50° to 90°, preferably approximately 70°, while the outer bristle tufts 31 sitting on the shorter main axis A-A extend over a circumferential section of 20° to 45°, approximately, preferably 30°, approximately.

Positioned on a second ring 15 of tufts, seen from the outside, are a total of ten tufts 13a and 13b, of which some have a circular cross-section and others an angular cross-section. In particular tufts 13a with a circular cross-section are arranged, as shown in FIG. 2, in the sectors 27 and 28 in which the longer outer bristle tufts 11 of the outer ring 12 lie, while angular tufts are provided in the intermediate sectors 29 and 30 of the bristle support 7 on the second ring 14. Also, the length of these tufts 13a and 13b on the second ring 14 varies cyclically from tuft to tuft along the circumference of the ring 14, in such a way that longer tufts are provided in said sectors 27 and 28 than in the sectors 29 and 30 lying on the short main axis.

Finally, in an innermost region, that is, in a third ring of tufts as seen looking from the outside, two elongated tufts 13c are provided which extend with their longitudinal dimension parallel to the longer main axis B-B.

As FIG. 3 shows, the tufts of the bristled section 10 have their free ends contoured or coordinated with each other with regard to their length and/or height, such that the working surface 34 of the bristled section 10 as defined by the free ends of the tufts has a central depression 16 with a groove-shaped bottom 17 which is curved in one direction and straight in a direction vertical to it. The curvature extends advantageously in the direction of the longer main axis B-B or in the direction of the toothbrush longitudinal axis 26 when the bristle support 7 is in its non-deflected neutral position. In a direction perpendicular thereto, which extends parallel to the shorter main axis A-A of the bristle support 7 and/or transversely to the toothbrush longitudinal axis 26 when the bristle support 7 is in its non-deflected neutral position, the depression 16 has a straight contour as shown in FIG. 4.

The central depression 16 can be constructed to be variously deep. In a further aspect of the invention, the deepest point of the depression 16 is set an amount of approximately 1 mm to 3 mm, preferably approximately 1.5 mm, deeper than the highest point of the bristled section 10. The concave groove-shaped contour of the bottom 17 of the depression 16 generally can have different curvatures. In the embodiment shown in FIGS. 3 to 5, a circular-arc-shaped contour with a curvature radius in the range from 8 mm to 17 mm, preferably approximately 10 mm to 14 mm and specifically about 12 mm, is provided, but this can vary depending on the dimensions and configuration of the bristled section.

As FIG. 3 shows, the end surfaces of the inner bristle tufts 13a, 13b and 13c and the end surfaces of the shorter bristle tufts 31, which likewise combine to define the concave groove-shaped bottom 17, are not constructed as plane surfaces but are likewise in themselves curved in groove shape. The groove-shaped curved end surfaces 35 complement each other and in combination form said concave groove-shaped contour of the bottom 17 of the central depression 16. In concrete terms, the inclination of the end surfaces of the inner bristle tufts 13 increases as the distance from the axis of rotation 9 in the direction parallel to the main axis B-B increases, cf. FIG. 3. In other words, the tufts arranged on the transversally extending main axis A-A are slightly curved at their free ends but nevertheless are aligned substantially parallel to the bristle support surface, while the inclination of the free ends increases as the distance from said main axis A-A increases.

As FIG. 3 also shows, the outer bristle tufts 11 arranged on the outer ring 12 in sectors 27 and 28 are extended relative to the other tufts or have a greater height such that they project beyond the other tufts that form the depression. This results in a step in height relative to the central depression 16, cf. FIG. 3, that is, the central depression 16 in the embodiment shown in FIG. 3 does not merge smoothly with the end surfaces of said outer bristle tufts 11. The step may be about 0.5 mm to 2 mm, in particular 0.5 mm to 1.0 mm and specifically 0.7 mm to 0.9 mm.

Said outer bristle tufts 11 in the opposing sectors 27 and 28, which in the neutral position of the bristle support contain the toothbrush longitudinal axis 26, have advantageously end surfaces 36 that comprise a flat section 19, which is aligned substantially vertically to the longitudinal axis of the tufts 11, as well as chamfers 18, which chamfer said end surfaces 36 towards the outside.

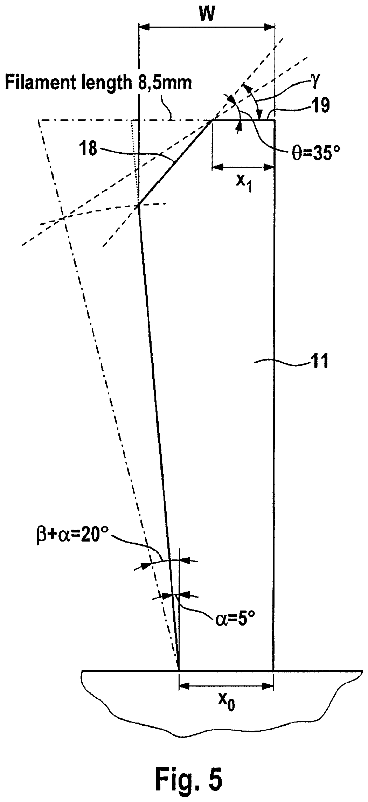

As FIG. 5 shows, said chamfers 18 extend at an angle γ in the range from 20° to 60°, preferably 30° to 40°, approximately. The chamfers 18 are advantageously as deep and wide as to cover approximately 25% to 75% of the width W of the respective tuft 11. In this case the width W is understood to be the dimension of the tuft vertically to its longitudinal axis and vertically to the longitudinal dimension of the chamfer 18, in the region of the free end of the tuft, cf. FIG. 5. In the embodiment shown in FIG. 5, the chamfer extends over approximately 1/4 to 3/4 of the width W (measured along the longitudinal axis B-B).

Said longer outer bristle tufts 11 are on the whole of a trapezoidal configuration as seen in their longitudinal section. While the inner lying flank of the tuft 11 extends substantially vertically to the plane defined by the bristle support 7, the outer lying flank is inclined towards a vertical on the bristle support 7 at an angle α of approximately 1.5° to 10°, preferably approximately 3° to 5°, such that the cross-section of the tuft 11 increases towards its free end, that is, the tuft becomes wider towards its free end. As a result, a large working surface is obtainable with a limited size of the bristle support 7. In addition, favorable geometrical proportions result at the free end of the tuft 11 in relation to its chamfer 18.

In order to embrace the tooth flanks as completely as possible, to distribute the brushing pressure over a wide area and to hold dentifrice or the like on the working surface 34, the tufts occupy with their free ends advantageously at least 35% to 55%, preferably 50% or more of the area defined by the bristle support 7. As FIG. 2 shows, the tufts on the outer ring 12 can extend over a circumferential section of 200° to 300°, approximately, when the extension of all tufts is added together. The second ring 14 of tufts, seen from the outside, can extend likewise over a circumference of altogether 200° to 300°, approximately, when the extension of all tufts along the circumference is added together. The innermost tufts can cover with their free ends advantageously an area substantially closed over its full surface.

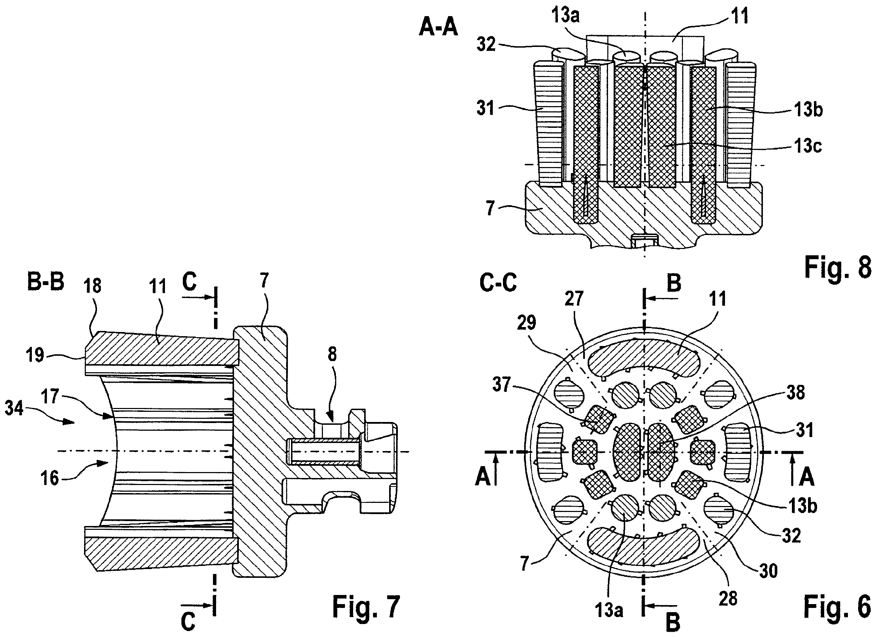

The embodiment of the brush head 4 shown in FIGS. 6 to 8 corresponds substantially to that of FIGS. 2 to 5 so that reference is made to the corresponding preceding description in order to avoid duplicate descriptions. The embodiment of FIGS. 6 to 8 differs substantially from that of FIGS. 2 to 5 only in the somewhat deeper contour of the central, groove-shaped depression 16, which is curved with a smaller radius of curvature, and in an on the whole round contour of the non-elongated tufts 32 on the outer ring 12 of tufts.

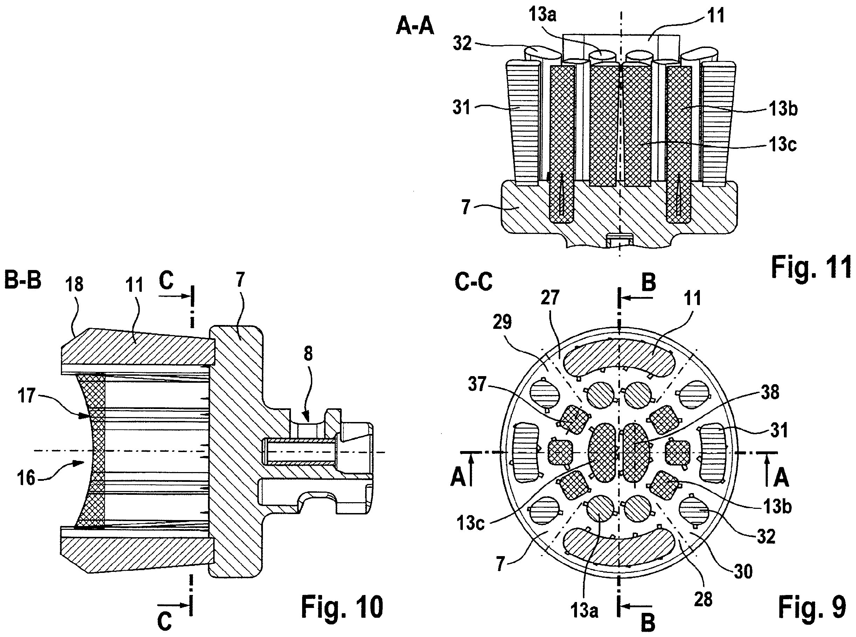

The other embodiment of the brush part of the brush head 4 shown in FIGS. 9 to 11 corresponds substantially to the embodiment of FIGS. 6 to 8 so that reference is made to its preceding description. Unlike said previous embodiment, the longer outer bristle tufts 11 in the sectors 27 and 28 of the bristle support 7, which in its non-deflected neutral position contain the toothbrush longitudinal axis 25, have more pronounced chamfers 18, which are chamfered at an angle γ of 55° relative to the flat sections 19 of the end surfaces 36 in order to permit an even better penetration of these tufts 11 into interproximal spaces.

On the other hand, some and/or all of the inner bristle tufts 13, in particular the inner bristle tufts 13b and 13c, which with their free ends define the groove-shaped bottom of the central depression 16, have their free ends specially constructed. Said tufts 13b and 13c are comprised at least partly of filaments whose ends are fanned out so that, so to speak, a soft pile and/or fleece is produced at the free ends, as a result of which dentifrice is well held particularly in this region and the tufts nestle around the tooth surface over almost its full area. The fanning out amounts to 1.0 mm to 2.5 mm, approximately.

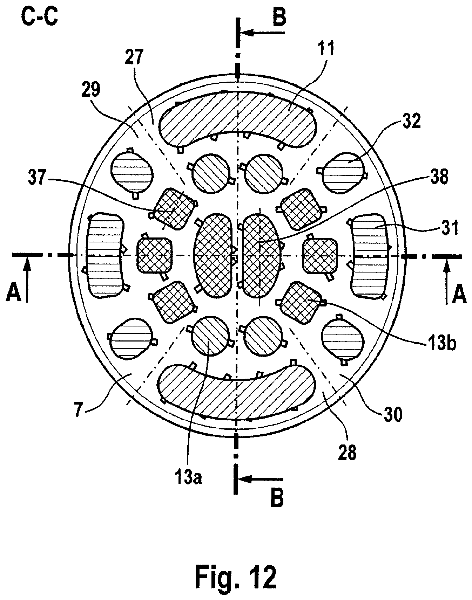

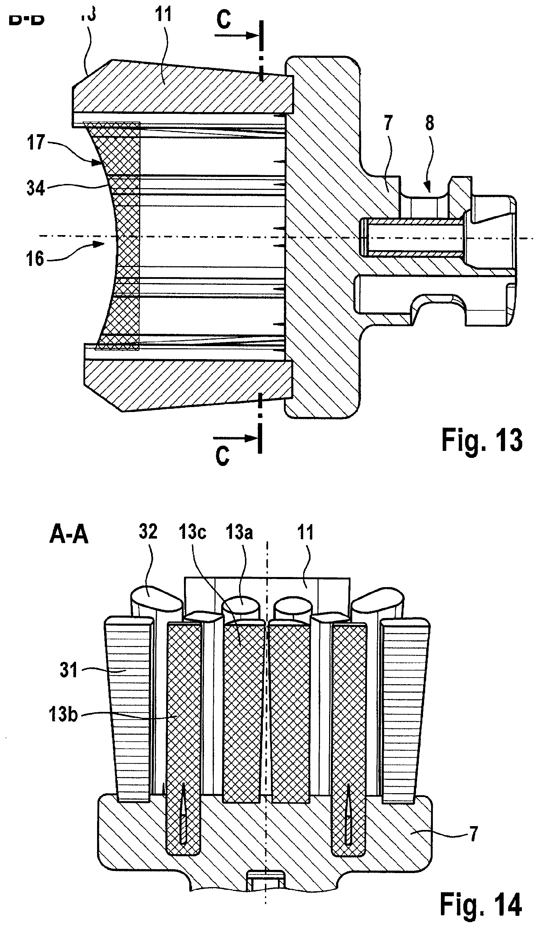

The embodiment shown in FIGS. 12 to 14 corresponds substantially to the embodiment of FIGS. 9 to 11 so that reference is made to its preceding description. Unlike this preceding embodiment, the maximum difference in height between the deepest point of the depression 16 and the highest point of the bristled section is bigger and amounts to 2 mm, approximately, for the same curvature of the bottom 17 of the depression 16. The bristles in the region of the sectors 27 and 28 differ in length. In addition, the adapting inclination between the two sides is preferably slightly different (in the range from 3° to 5°). Therefore, the sectors 27 and 28 with the longer outer bristles can be either mutually similar and symmetrical or, alternatively, mutually dissimilar and asymmetrical.

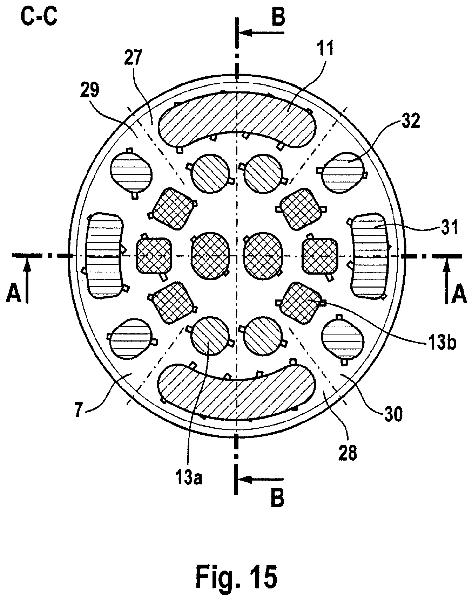

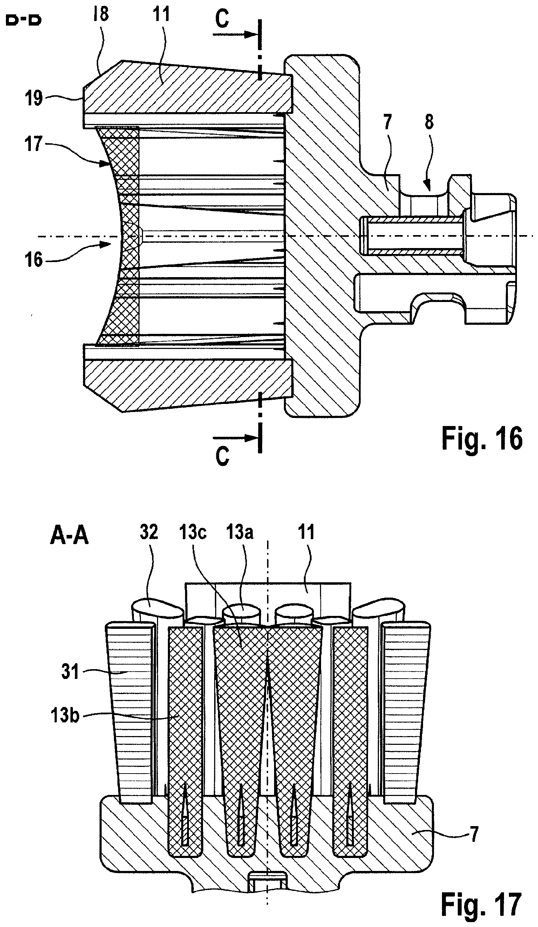

The other embodiment of the brush part of the brush head 4 shown in FIGS. 15 to 17 corresponds substantially to the preceding embodiment of FIGS. 12 to 14 so that reference is made to its preceding description. Unlike this preceding embodiment, the innermost ring 15 of the bristle support 7 includes two less greatly elongated tufts 13c which substantially have a slightly oval cross-section and are orientated with their longitudinal axes parallel to the main axis B-B. However, as FIG. 17 shows, said innermost tufts 13c are widened with a more pronounced taper so that their cross-section increases towards the free ends. As FIG. 17 shows, the innermost tufts 13 flare at an opening angle in the range from 0° to 10°, preferably 1.5° to 5°, approximately, such that in the region of the free ends the two tufts 13c so to speak unite and form a joint surface while at the foot end on the bristle support 7 they are spaced from one another.

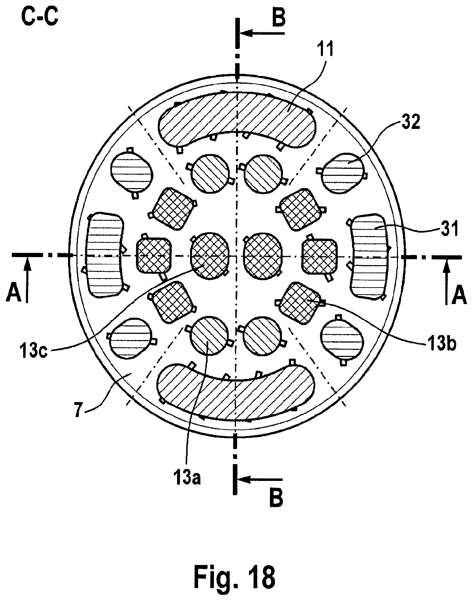

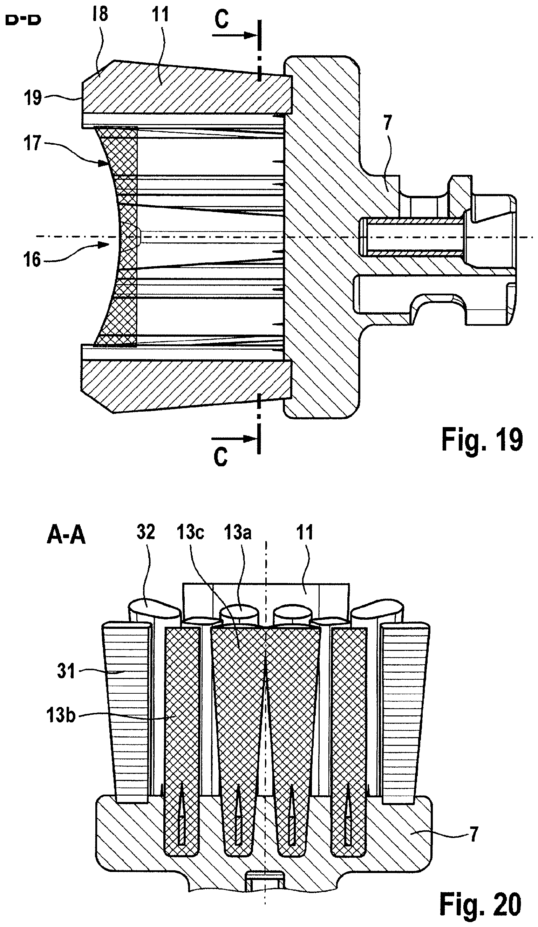

The embodiment shown in FIGS. 18 to 20 corresponds substantially to the preceding embodiment of FIGS. 15 to 17 so that reference is made to its preceding description. However, unlike the preceding embodiment the chamfers 18 of the elevated, outer bristle tufts 11 in the sectors 27 and 28 are of a different configuration. While the chamfers 18 of the preceding embodiments extended in a straight line, that is, in spite of the arcuate shape of the tufts 11 as seen in the plan view they defined a plane surface, the chamfers 18 of the embodiment of FIGS. 18 to 20 are arcuately curved, with the chamfers 18 being likewise curved around the axis of rotation 9 in accordance with the curved shape of the tufts 11, such that a substantially uniform chamfering of the tufts 11 results. More accurately speaking, the tufts 11 are chamfered by the same amount substantially along their entire length, that is, their dimension in the circumferential direction, because the chamfer 18 follows the shape of the tufts 11. This configuration can also be applied to all other embodiments described.

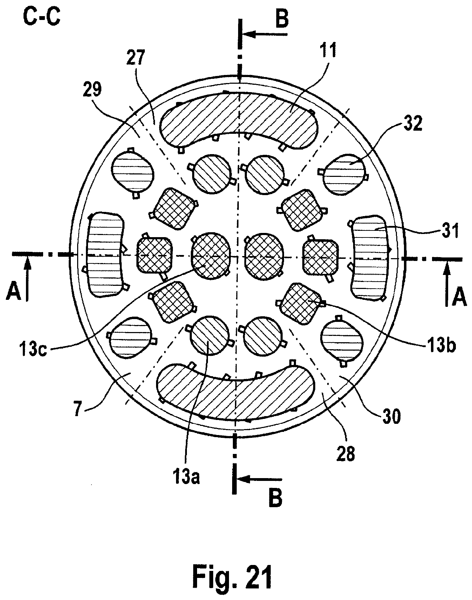

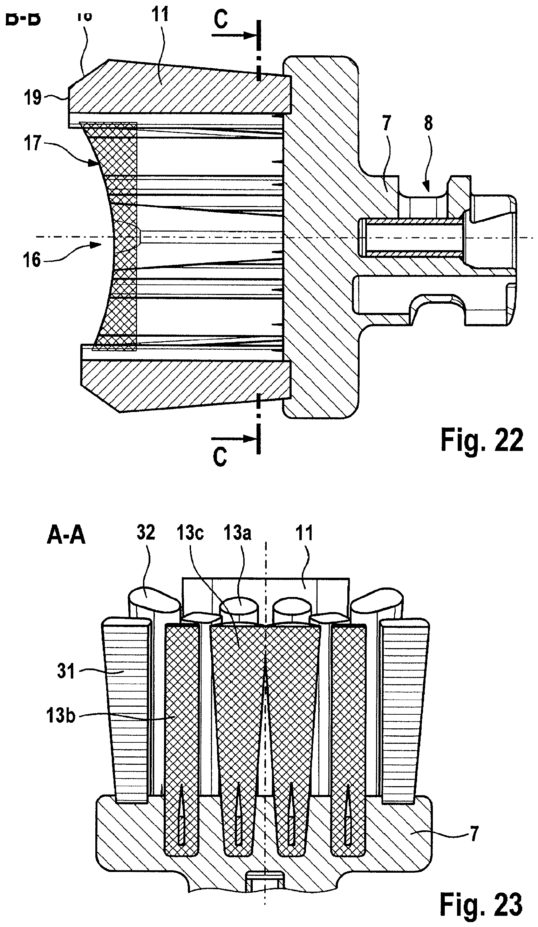

The embodiment of FIGS. 21 to 23 corresponds substantially to the embodiment of FIGS. 12 to 14 so that reference is made to its preceding description. In the embodiment of FIGS. 21 to 23, the depression 16 relative to the longer outer bristle tufts 11 is made deeper compared to FIGS. 15 to 17, such that a difference in height of 2 mm, approximately, results between the deepest point of the depression 16 and the highest point of the tufts 11.

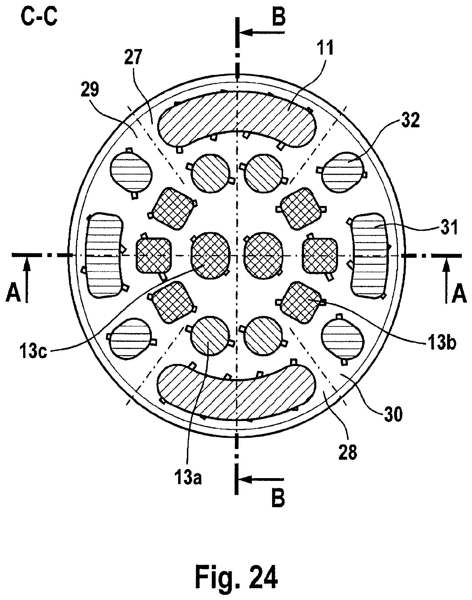

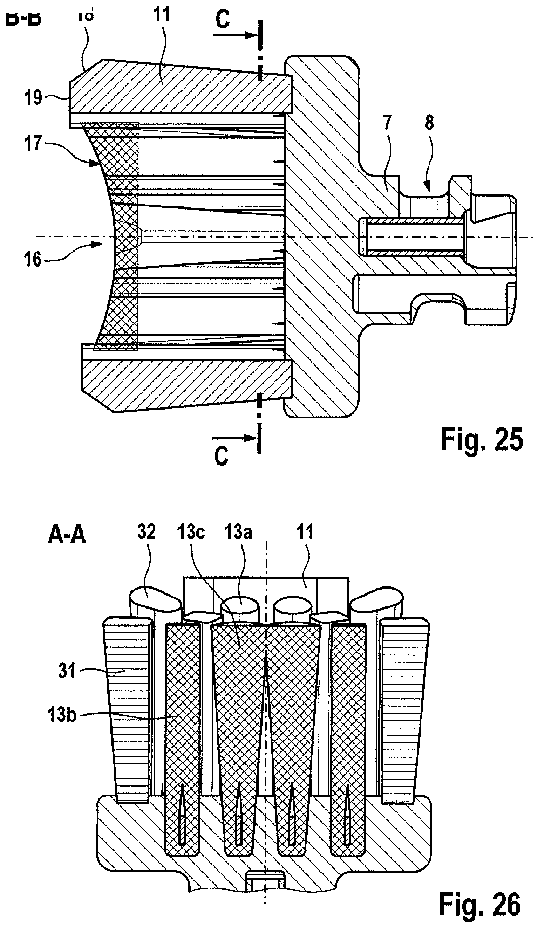

The embodiment of FIGS. 24 to 26 corresponds substantially to the preceding embodiment of FIGS. 18 to 20 so that reference is made to its preceding description. In contrast to said preceding embodiment, the depression 16 is made deeper relative to the longer outer bristle tufts 11, such that a maximum difference in height of 2 mm, approximately, results.

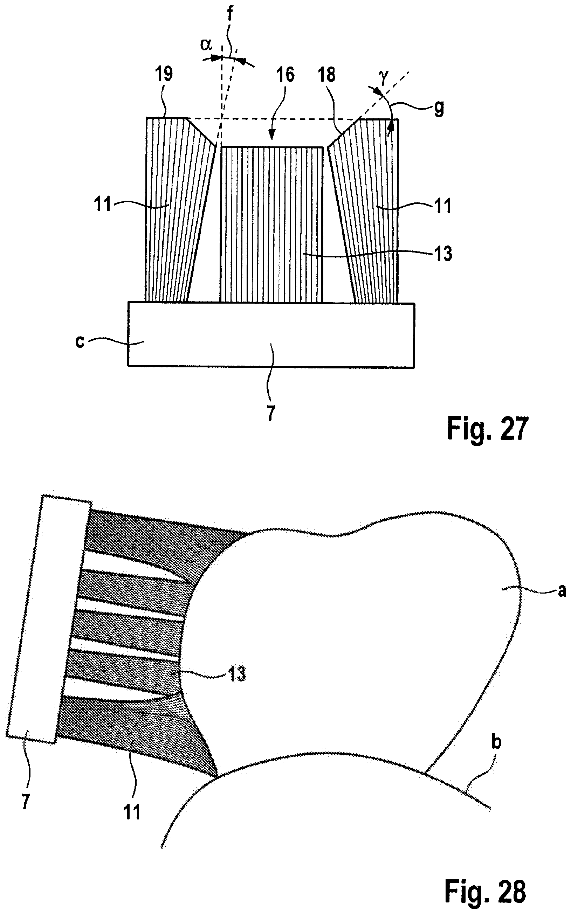

As FIG. 27 shows, the longer outer bristle tufts 11, which are arranged in the sectors 27 and 28 in which the longitudinal axis 26 of the toothbrush lies preferably in the non-deflected neutral position of the bristle support 7, can have chamfers 18 also on the inner side, that is, on the side close to the axis of rotation, and the width and angle of the chamfer 18 can correspond substantially to the previously described geometrical proportions. This applies preferably also for the shorter outer bristles 31 of the sectors 29 and 30. As FIG. 27 shows, said tufts 11 and 31 are likewise of trapezoidal shape, with the chamfering being provided however on the inner side, that is, the inner flanks of the tufts 11 are inclined towards a vertical on the bristle support 7 at an acute angle in the range from 1.5° to 10° while the outer flanks stand substantially vertically to the bristle support 7.

As FIG. 28 shows, as a result of said chamfer 18 on the inner side of the longer outer bristle tufts 11 or shorter outer bristle tufts 31, the free ends of the bristles rest particularly snugly against the cambered tooth flank contour.

The variant including the inner chamfer is preferred in conjunction with shorter outer bristle tufts 31 because of its ability to enhance the cleaning action on the supra-gingival tooth areas.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document cited in the present disclosure, the meaning or definition assigned to that term in this document shall govern.

While particular embodiments of the present invention have been illustrated and described, it would be obvious to those skilled in the art that various other changes and modifications can be made without departing from the scope defined by the appended claims. It is therefore intended to cover in the appended claims all such changes and modifications that are within the scope of the appended claims.

## Claims

1. A brush head for an electric toothbrush (1), comprising:
a bristle support (7) having mounting means (8) for the movable mounting of the bristle support (7), said bristle support (7) carrying at least two outer bristle tufts (11) and several inner bristle tufts (13a, 13b, 13c), said outer bristle tufts (11) having a greater height than said inner bristle tufts (13a, 13b, 13c),
a working surface (34) being defined by the free ends of the inner and outer bristle tufts and having a central depression (16),
wherein a step-shaped jump in height is provided between the central depression (16) and said outer bristle tufts (11), and
wherein the free ends of the inner bristle tufts (13a, 13b, 13c) have inclined end surfaces, with different inner bristle tufts (13a, 13b, 13c) having end surfaces with different inclinations, such as to form said continuous curvature of the groove-shaped concave bottom (17), **characterized in that** said central depression (16) has a groove-shaped concave bottom (17) that is continuously curved in one direction.

2. The brush head according to claim 1, wherein the mounting means (8) are suitable to enable a rotational oscillatory movement of the bristle support, in particular wherein the mounting means (8) of the bristle support (7) define an axis of rotation (9) for said bristle support (7) suitable for producing an oscillatory rotational motion of the bristle support (7).

3. The brush head according to claim 2 wherein the inclination of the end surfaces of the inner bristle tufts (13) is increasingly pronounced as the distance between the inner bristle tufts (13) and the center of the bristle support (7) increases.

4. The brush head according to one of claims 1 to 3, wherein the height of the step-shaped jump in height is about 0.5 mm to 2.0 mm, preferably 0.7 mm - 1.0 mm.

5. The brush head according to one of claims 1 to 4, wherein the angle formed between a tangent laying at a curved edge of the central depression (16) and a plane being parallel to the bristle-carrying surface of the bristle support (7) is maximally about 10 degrees to about 25 degrees, in particular maximally about 15 degrees to about 20 degrees.

6. The brush head according to one of claims 1 to 5 wherein the outer and inner bristle tufts (11; 13a, 13b, 13c) are arranged on the bristle support (7) in several nesting rings and the outer bristle tufts (11) are arranged opposite to each other in the outermost of the nested rings.

7. The brush head according to one of claims 1 to 6, wherein at least one of the outer bristle tufts (11) has a chamfer (18) at the outer lying edge of its free end.

8. The brush head according to claim 7 wherein the chamfer (18) is inclined relative to a flat section (19) of the free ends of the tufts (11) at an angle (γ) ranging between 20° and 60°, and/or extends over 25% to 75% of a width (W) of the respective tuft (11), said width (W) being understood to mean the dimension of the tuft (11) perpendicularly to its longitudinal axis and transversely to the longitudinal dimension of the respective chamfer (18).

9. The brush head according to one of claims 1 to 8 wherein said outer bristle tufts (11) are inclined towards the circumferential side of the bristle support (7) at an acute angle (α) in the range from 1.5° to 15°, preferably 3° to 5°.

10. The brush head according to one of claims 1 to 9 wherein said outer bristle tufts (11) are trapezoidally shaped as seen in a longitudinal sectional view of the outer bristle tuft (11), with the free end of the respective tuft (11) being wider than its inner end.

11. The brush head according to one of claims 1 to 10 wherein an inner flank of said outer bristle tufts (11), which faces the inner bristle tufts (13a, 13b, 13c), extends substantially vertically to the bristle-carrying surface of the bristle support (7) and an outer flank of said outer bristle tufts (11) is inclined towards the circumferential side of the bristle support (7) at an acute angle to a vertical on the bristle support.

12. The brush head according to one of claims 1 to 11 wherein one of the outer bristle tuft (11) is arranged on a first circumferential side of the bristle support (7) and is of greater height than another of the outer bristle tufts (11) that is arranged on a second circumferential side of the bristle support (7).

13. The brush head according to one of claims 1 to 12 wherein the outer bristle tufts (11) are arranged on opposing sides of the central depression (16) in a direction in which the groove-shaped concave bottom (17) of the central depression (16) has its curvature.

14. The brush head according to one of claims 1 to 13 wherein the groove-shaped bottom, which is formed by the free ends of the bristles, is constructed as part of a cylinder shape.

15. The brush head according to claim 14 wherein the radius of a section through the groove-shaped bottom or the cylinder shape is about 9 mm to 15 mm, in particular is about 10 mm to 13 mm.

## Patentansprüche

1. Bürstenkopfstück für eine elektrische Zahnbürste (1), umfassend:
einen Borstenträger (7), der ein Befestigungsmittel (8) zum beweglichen Befestigen des Borstenträgers (7) aufweist, wobei der Borstenträger (7) mindestens zwei äußere Borstenbüschel (11) und mehrere innere Borstenbüschel (13a, 13b, 13c) trägt, wobei die äußeren Borstenbüschel (11) eine größere Höhe aufweisen als die inneren Borstenbüschel (13a, 13b, 13c),
eine Arbeitsfläche (34), die durch die freien Enden der inneren und äußeren Borstenbüschel definiert ist und eine zentrale Vertiefung (16) aufweist,
wobei zwischen der zentralen Vertiefung (16) und den äußeren Borstenbüscheln (11) ein stufenförmiger Höhensprung vorgesehen ist, und
wobei die freien Enden der inneren Borstenbüschel (13a, 13b, 13c) schräge Endflächen aufweisen, wobei unterschiedliche innere Borstenbüschel (13a, 13b, 13c) Endflächen mit unterschiedlichen Neigungen aufweisen, wie zum Bilden der ununterbrochenen Krümmung des nutförmigen konkaven Unterteils (17), **dadurch gekennzeichnet, dass** die zentrale Vertiefung (16) einen nutförmigen konkaven Unterteil (17) aufweist, der ununterbrochen in einer Richtung gekrümmt ist.

2. Bürstenkopfstück nach Anspruch 1, wobei das Befestigungsmittel (8) geeignet ist, um eine oszillierende Drehbewegung des Borstenträgers (7) zu ermöglichen, wobei insbesondere das Befestigungsmittel (8) des Borstenträgers (7) eine Drehachse (9) für den Borstenträger (7) definiert, die geeignet ist, um eine oszillierende Drehbewegung des Borstenträgers (7) zu bewirken.

3. Bürstenkopfstück nach Anspruch 2, wobei die Neigung der Endflächen der inneren Borstenbüschel (13) mit zunehmendem Abstand zwischen den inneren Borstenbüscheln (13) und der Mitte des Borstenträgers (7) zunehmend ausgeprägt ist.

4. Bürstenkopf nach einem der Ansprüche 1 bis 3, wobei die Höhe des stufenförmigen Höhensprungs etwa 0,5 mm bis 2,0 mm, vorzugsweise 0,7 mm bis 1,0 mm, beträgt.

5. Bürstenkopf nach einem der Ansprüche 1 bis 4, wobei der Winkel, der zwischen einer an einer gekrümmten Kante der zentralen Vertiefung (16) anliegenden Tangente und einer Ebene gebildet wird, die zur Borstenträgerfläche des Borstenträgers (7) parallel ist, maximal etwa 10 bis etwa 25 Grad, insbesondere maximal etwa 15 Grad bis etwa 20 Grad, beträgt.

6. Bürstenkopfstück nach einem der Ansprüche 1 bis 5, wobei die äußeren und inneren Borstenbüschel (11; 13a, 13b, 13c) auf dem Borstenträger (7) in mehreren Verschachtelungsringen angeordnet sind und die äußeren Borstenbüschel (11) in dem äußersten der verschachtelten Ringe einander gegenüberliegend angeordnet sind.

7. Bürstenkopfstück nach einem der Ansprüche 1 bis 6, wobei wenigstens eins der äußeren Borstenbüschel (11) an der außenliegenden Kante seines freien Endes eine Abschrägung (18) aufweist.

8. Bürstenkopfstück nach Anspruch 7, wobei die Abschrägung (18) in Bezug auf einen flachen Abschnitt (19) der freien Enden der Büschel (11) in einem Winkel (γ) im Bereich zwischen 20° und 60° geneigt ist und/oder sich über 25 % bis 75 % einer Breite (W) des entsprechenden Büschels (11) erstreckt, wobei die Breite (W) die Abmessung des Büschels (11) lotrecht zu dessen Längsachse und quer zur Längsabmessung der entsprechenden Abschrägung (18) bedeutet.

9. Bürstenkopfstück nach einem der Ansprüche 1 bis 8, wobei die äußeren Borstenbüschel (11) zur Umfangsseite des Borstenträgers (7) in einem spitzen Winkel (α) im Bereich von 1,5° bis 15°, vorzugsweise von 3° bis 5°, geneigt sind.

10. Bürstenkopfstück nach einem der Ansprüche 1 bis 9, wobei die äußeren Borstenbüschel (11) in einem Längsschnitt des äußeren Bortenbüschels (11) trapezförmig sind, wobei das freie Ende des jeweiligen Büschels (11) breiter ist als dessen inneres Ende.

11. Bürstenkopfstück nach einem der Ansprüche 1 bis 10, wobei sich eine innere Flanke der äußeren Borstenbüschel (11), die den inneren Borstenbüscheln (13a, 13b, 13c) zugewandt ist, sich im Wesentlichen vertikal zur borstentragenden Oberfläche des Borstenträgers (7) erstreckt und eine äußere Flanke der äußeren Borstenbüschel (11) in einem zu einer Vertikalen des Borstenträgers (7) spitzen Winkel zur Umfangsseite des Borstenträgers (7) geneigt ist.

12. Bürstenkopfstück nach einem der Ansprüche 1 bis 11, wobei eins der äußeren Borstenbüschel (11) auf einer ersten Umfangsseite des Borstenträgers (7) angeordnet ist und eine größere Höhe aufweist als die anderen Borstenbüschel (11), die auf einer zweiten Umfangsseite des Borstenträgers (7) angeordnet sind.

13. Bürstenkopfstück nach einem der Ansprüche 1 bis 12, wobei die äußeren Borstenbüschel (11) in einer Richtung, in welcher der nutförmige konkave Unterteil (17) der zentralen Vertiefung (16) seine Krümmung aufweist, auf einander entgegengesetzten Seiten der zentralen Vertiefung (16) angeordnet sind.

14. Bürstenkopfstück nach einem der Ansprüche 1 bis 13, wobei der nutförmige Unterteil, der von den freien Enden der Borsten gebildet ist, als Teil einer Zylinderform konstruiert ist.

15. Bürstenkopfstück nach Anspruch 14, wobei der Radius eines Querschnitts durch den nutförmigen Unterteil oder die Zylinderform etwa 9 mm bis 15 mm, insbesondere etwa 10 mm bis 13 mm, beträgt.

## Revendications

1. Tête de brosse pour une brosse à dents électrique (1), comprenant :
un support de poils (7) ayant des moyens de montage (8) pour le montage mobile du support de poils (7), ledit support de poils (7) portant au moins deux touffes de poils externes (11) et plusieurs touffes de poils internes (13a, 13b, 13c), lesdites touffes de poils externes (11) ayant une hauteur supérieure auxdites touffes de poils internes (13a, 13b, 13c),
une surface de travail (34) étant définie par les extrémités libres des touffes de poils internes et externes et ayant une dépression centrale (16),
dans laquelle un relèvement en hauteur en forme de marche est fourni entre la dépression centrale (16) et lesdites touffes de poils externes (11), et
dans laquelle les extrémités libres des touffes de poils internes (13a, 13b, 13c) ont des surfaces d'extrémité inclinées, avec des touffes de poils internes différentes (13a, 13b, 13c) ayant des surfaces d'extrémité avec des inclinaisons différentes, de manière à former ladite courbure continue du fond concave en forme de rainure (17), **caractérisée en ce que** ladite dépression centrale (16) a un fond concave en forme de rainure (17) qui est courbé en continu dans une direction.

2. Tête de brosse selon la revendication 1, dans laquelle les moyens de montage (8) sont appropriés pour permettre un mouvement de rotation oscillatoire du support de poils, en particulier dans laquelle les moyens de montage (8) du support de poils (7) définissent un axe de rotation (9) pour ledit support de poils (7) approprié pour produire un mouvement de rotation oscillatoire du support de poils (7).

3. Tête de brosse selon la revendication 2, dans laquelle l'inclinaison des surfaces d'extrémité des touffes de poils internes (13) est de plus en plus prononcée alors que la distance entre les touffes de poils internes (13) et le centre du support de poils (7) augmente.

4. Tête de brosse selon l'une des revendications 1 à 3, dans laquelle la hauteur du relèvement en hauteur en forme de marche est d'environ 0,5 mm à 2,0 mm, de préférence de 0,7 mm à 1,0 mm.

5. Tête de brosse selon l'une des revendications 1 à 4, dans laquelle l'angle formé entre une tangente placée au niveau d'un bord courbé de la dépression centrale (16) et un plan étant parallèle à la surface portant des poils du support de poils (7) est au maximum d'environ 10 degrés à environ 25 degrés, en particulier au maximum d'environ 15 degrés à environ 20 degrés.

6. Tête de brosse selon l'une des revendications 1 à 5 dans laquelle les touffes de poils externes et internes (11 ; 13a, 13b, 13c) sont disposés sur le support de poils (7) dans plusieurs anneaux d'imbrication et les touffes de poils externes (11) sont disposées opposées les unes aux autres dans le plus à l'extérieur des anneaux imbriqués.

7. Tête de brosse selon l'une des revendications 1 à 6, dans laquelle au moins l'une des touffes de poils externes (11) a un chanfrein (18) au niveau du bord externe de son extrémité libre.

8. Tête de brosse selon la revendication 7 dans laquelle le chanfrein (18) est incliné par rapport à une section plate (19) des extrémités libres des touffes (11) selon un angle (γ) compris entre 20° et 60°, et/ou s'étend sur 25 % à 75 % d'une largeur (W) de la touffe respective (11), ladite largeur (W) étant entendue comme signifiant la dimension de la touffe (11) perpendiculairement à son axe longitudinal et transversalement à la dimension longitudinale du chanfrein respectif (18).

9. Tête de brosse selon l'une des revendications 1 à 8 dans laquelle lesdites touffes de poils externes (11) sont inclinées vers le côté circonférentiel du support de poils (7) selon un angle aigu (α) dans la plage allant de 1,5° à 15°, de préférence de 3° à 5°.

10. Tête de brosse selon l'une des revendications 1 à 9 dans laquelle lesdites touffes de poils externes (11) sont de forme trapézoïdale comme observé dans une vue en coupe longitudinale de la touffe de poils externe (11), avec l'extrémité libre de la touffe respective (11) étant plus large que son extrémité interne.

11. Tête de brosse selon l'une des revendications 1 à 10 dans laquelle un flanc interne desdites touffes de poils externes (11), qui fait face aux touffes de poils internes (13a, 13b, 13c), s'étend de manière essentiellement verticale vers la surface portant des poils du support de poils (7) et un flanc externe desdites touffes de poils externes (11) est incliné vers le côté circonférentiel du support de poils (7) selon un angle aigu par rapport à une verticale sur le support de poils.

12. Tête de brosse selon l'une des revendications 1 à 11 dans laquelle l'une des touffes de poils externes (11) est disposée sur un premier côté circonférentiel du support de poils (7) et est de plus grande hauteur qu'une autre des touffes de poils externes (11) qui est disposée sur un deuxième côté circonférentiel du support de poils (7).

13. Tête de brosse selon l'une des revendications 1 à 12 dans laquelle les touffes de poils externes (11) sont disposées sur des côtés opposés de la dépression centrale (16) dans une direction dans laquelle le fond concave en forme de rainure (17) de la dépression centrale (16) a sa courbure.

14. Tête de brosse selon l'une des revendications 1 à 13 dans laquelle le fond en forme de rainure, qui est formé par les extrémités libres des poils, est construit en tant que partie d'une forme de cylindre.

15. Tête de brosse selon la revendication 14 dans laquelle le rayon d'une section à travers le fond en forme de rainure ou la forme de cylindre est d'environ 9 mm à 15 mm, en particulier d'environ 10 mm à 13 mm.
